# FASCICULE DE BREVET EUROPEEN

(11) **EP 1 151 018 B1**
(45) Date de publication et mention de la délivrance du brevet: **16.06.2004**
(21) Numéro de dépôt: 99954038.8
(22) Date de dépôt: 28.10.1999
(51) Int. Cl.: C08F 20/62

(54) **PROCEDE DE POLYMERISATION PAR CHAUFFAGE DIELECTRIQUE D'ACIDES GRAS INSATURES, D'ESTERS D'ACIDES GRAS INSATURES, D'HYDROCARBURES INSATURES, OU DE DERIVES INSATURES DE CES PRODUITS**
POLYMERISATIONSVERFAHREN DURCH DIELEKTRISCHE HEIZUNG VON UNGESÄTTIGTEN FETTSÄUREN, VON ESTERN VON UNGESÄTTIGTEN FETTSÄUREN, VON UNGESÄTTIGTEN KOHLENWASSERSTOFFEN ODER VON UNGESÄTTIGTEN DERIVATEN DIESER PRODUKTE
POLYMERISATION METHOD BY DIELECTRIC HEATING OF UNSATURATED FATTY ACIDS, UNSATURATED FATTY ACID ESTERS, UNSATURATED HYDROCARBONS, OR UNSATURATED DERIVATIVES OF SAID PRODUCTS

(30) Priorité: 30.10.1998 FR 9813770
(43) Date de publication de la demande: 07.11.2001
(73) Titulaire: Aldivia S.A., 69531 Saint Genis-Laval (FR)
(72) Inventeur: CHARLIER DE CHILY, Pierre, F-69540 Irigny (FR)
(74) Mandataire: Richebourg, Michel François
(86) Numéro de dépôt international: PCT/FR1999/002646
(87) Numéro de publication internationale: WO 2000/026265

(56) Documents cités:
- DE-A- 1 543 013
- FR-A- 2 199 754
- D. JOHNSON: "SYNTHESIS OF HIGH-MOLECULAR WEIGHT POLYMERS BY MICROWAVE RADIATION" IBM TECHNICAL DISCLOSURE BULLETIN, vol. 18, no. 1, juin 1975 (1975-06), page 221 XP002106501

## Description

La présente invention concerne un procédé de polymérisation d'acides gras insaturés, d'esters d'acides gras insaturés, d'hydrocarbures insaturés ou de dérivés insaturés de ces produits, par chauffage diélectrique c'est-à-dire sous fréquences micro-ondes ou fréquences radio.

Les composés obtenus par polymérisation d'acides gras ou d'esters d'acides gras insaturés sont bien connus. Plus particulièrement, on peut citer les polymères obtenus à partir d'huiles végétales insaturées. Les procédés de polymérisation utilisent les doubles liaisons des acides gras ou, après un premier traitement (isomérisation), les liaisons conjuguées.

Les procédés actuels de préparation de ces polymères tels que les huiles soufflées ou les standolies sont caractérisés par l'utilisation de la chaleur (polymérisation thermique), en présence de catalyseurs (homogènes ou hétérogènes). L'utilisation de catalyseurs tels que l'oxygène ou l'anthraquinone permet d'obtenir des polymères de grande viscosité mais très réactifs après leur préparation ce qui n'est intéressant que pour des domaines d'application tels que les peintures où l'on demande au produit de sécher (phénomène de réticulation).

En revanche, dans des domaines tels que la lubrification, la cosmétique ou la pharmacie, on recherche plutôt des polymères stables aux contraintes extérieures (oxygène, eau,...). En cosmétique et en pharmacie s'ajoute parfois la contrainte d'éliminer les traces de catalyseurs.

Des polymères ont été développés sur ce constat : ils sont préparés à partir de triglycérides dont au moins un acide gras comprend au moins une insaturation (conjuguées ou non), de préférence sans catalyseur et dans une atmosphère dépourvue d'oxygène. Ces développements utilisent les procédés thermiques tels que les ceintures chauffantes, les gilothermes ou les résistances qui nécessitent beaucoup de temps, ce qui généralement empêche l'obtention de polymères présentant des viscosités élevées; par ailleurs, du fait de l'importance des investissements exigés, ils sont coûteux.

L'invention permet de réduire ces inconvénients majeurs. L'utilisation de micro-ondes ou fréquences radio présente un double intérêt : d'une part l'énergie micro-onde ou haute fréquence interagit immédiatement au niveau moléculaire ; d'autre part l'énergie nécessaire est plus faible (ce sont les molécules elles-mêmes qui, polarisées par les champs électriques des micro-ondes ou fréquences radio, transforment l'énergie électromagnétique en chaleur).

Le demandeur a découvert selon un premier aspect de l'invention que la polymérisation d'acides gras insaturés, d'esters d'acides gras insaturés, d'hydrocarbures insaturés, de dérivés insaturés de ces produits, ou de leur mélange, par chauffage diélectrique c'est-à-dire à l'aide de fréquences micro-ondes ou fréquences radio, de préférence micro-ondes, permet d'obtenir des produits à viscosité élevée avec des temps de réaction plus avantageux.

L'invention concerne donc le procédé général de polymérisation d'acides gras insaturés, d'esters d'acides gras insaturés, d'hydrocarbures insaturés, de dérivés insaturés de ces produits ou de leurs différents mélanges, et des produits analogues, par chauffage diélectrique c'est-à-dire à l'aide de fréquences micro-ondes ou fréquences radio, de préférence micro-ondes.

L'emploi de l'énergie des micro-ondes est déjà connue dans l'industrie, mais dans un domaine différent, et pour répondre à des problèmes différents, notamment dans le domaine des résines époxy et analogues.

Les micro-ondes ou fréquences radio n'ont pas été décrites pour la polymérisation des produits du type ci-dessus, et en particulier pas du squalène.

Il n'a pas non plus été décrit que le squalane utilisé en cosmétique pouvait être remplacé très avantageusement par un polymère du squalène. obtenu de manière peu coûteuse par le procédé selon l'invention.

Les gains de temps et d'énergie combinés à un coût d'investissement plus faible permettent d'établir que le procédé par chauffage diélectrique est plus rapide et plus économique.

La présente invention s'attache à la polymérisation d'acides gras insaturés, d'esters d'acides gras insaturés, d'hydrocarbures insaturés : huiles végétales, huiles et graisses animales, ainsi que de leurs dérivés insaturés. Ces produits peuvent être utilisés sous forme brute ou raffinée, après avoir éventuellement subi un traitement préalable.

La réaction peut faire intervenir un seul réactif ou un mélange de réactifs en proportion variable.

La polymérisation est effectuée en soumettant le ou les réactifs à un chauffage diélectrique c'est-à-dire un chauffage sous fréquences comprises entre environ 30 GHz et environ 3 MHz. Les fréquences micro-ondes, qui sont préférées, sont comprises entre environ 30 GHz et environ 300 MHz, préférentiellement à 2,45 GHz (fréquence autorisée avec une tolérance de 2 %) ou à 915 MHz (fréquence autorisée avec une tolérance de 1,4 %). Les fréquences radio sont comprises entre environ 300 MHz et environ 3 MHz, préférentiellement à 13,56 MHz (fréquence autorisée avec une tolérance de 0,05 %) ou à 27,12 MHz (fréquence autorisée avec une tolérance de 0,6 %)

Les températures de réactions se situent entre 200 et 400°C et mieux encore de 230 à 350°C, avec une montée en température de trois à soixante minutes et mieux encore de trois à vingt minutes, pendant une durée totale de réaction de quinze minutes à quinze heures, de préférence de quinze à trois cent soixante minutes, et mieux encore de quinze à cent vingt minutes, avec ou sans catalyseur, de préférence sans catalyseur, sous agitation permanente, sous atmosphère inerte ou non en fonction de ce que l'on veut obtenir.

Pour la présente invention, le ou les réactifs de polymérisation peuvent être choisis parmi les huiles et graisses animales ou végétales et parmi les polyterpènes dont certains sont issus desdites huiles et graisses.

En tant qu'huiles ou graisses d'origine animale, on peut citer entre autres, l'huile de cachalot, l'huile de dauphin, l'huile de baleine, l'huile de phoque, l'huile de sardine, l'huile de hareng, l'huile de squale, l'huile de foie de morue, l'huile de pied de boeuf, les graisses de boeuf, de porc, de cheval, de mouton (suifs).

En tant qu'huiles d'origine végétale, on peut mentionner, entre autres, l'huile de colza, l'huile de tournesol, l'huile d'arachide, l'huile d'olive, l'huile de noix, l'huile de maïs, l'huile de soja, l'huile de lin, l'huile de chanvre, l'huile de pépins de raisin, l'huile de coprah, l'huile de palme, l'huile de graine de coton, l'huile de babassu, l'huile de jojoba, l'huile de sésame, l'huile de ricin, l'huile de ricin déshydratée, l'huile de noisette, l'huile de germe de blé, l'huile de bourrache, l'huile d'onagre, l'huile de tall.

On peut également utiliser des composants d'huiles animales ou végétales tel que le squalène extrait des insaponifiables des huiles végétales (l'huile d'olive, l'huile d'arachide, l'huile de colza, l'huile de germe de maïs, l'huile de coton, l'huile de lin, l'huile de germe de blé, l'huile de son de riz) ou bien contenu en grande quantité dans l'huile de squale.

En tant qu'acides gras insaturés, on peut utiliser, seul ou en mélange, et à titre d'exemples non limitatifs, un ou des acides gras monoinsaturés comme l'acide oléique, l'acide palmitoléique, l'acide myristique, l'acide pétrosélénique, l'acide érucique, etc... ; un ou des acides gras polyinsaturés comme par exemple l'acide linoléique, les acides alpha-linolénique et gamma-linolénique, l'acide arachidonique ; un ou des acides comprenant des diènes conjugués ou. des triènes conjugués comme l'acide licanique ou les isomères des acides linoléiques ou linoléniques ; un ou des acides comprenant un ou plusieurs groupes hydroxyles comme l'acide ricinoléique.

En tant qu'esters d'acides gras insaturés, on peut utiliser, seul ou en mélange, et à titre d'exemples non limitatifs, un ou des esters obtenus par estérification entre un monoalcool et/ou un polyol (seul ou en mélange), et au moins un acide gras insaturé. On peut citer comme exemples non limitatifs de monoalcool le méthanol, l'éthanol, ou le butanol ; comme exemples non limitatifs de polyols le glycérol, le sorbitol, le néopentylglycol, le triméthylpropane, le pentaérythritol, le glycol, l'éthylène glycol, le polyéthylène glycol. On peut également utiliser comme esters d'acides gras les cires et les phospholipides.

En tant qu'hydrocarbures insaturés, on peut utiliser, seul ou en mélange, et à titre d'exemples non limitatifs, un alcène, par exemple un ou des hydrocarbures terpéniques, oxygénés ou pas, c'est-à-dire un ou des polymères de l'isoprène, ou un ou des polymères de l'isobutène, du styrène, de l'éthylène, du butadiène, de l'isoprène, du propène ou un ou des copolymères de ces alcènes.

Les dérivés insaturés de ces composés peuvent être obtenus par exemple par fonctionnalisation des insaturations restantes par toute méthode connue de l'homme de l'art comme par exemple l'hydrogénation, l'hydroxylation, l'époxydation ou la sulfonation.

De manière préférentielle, on utilisera comme réactif ou mélange réactionnel un ou des esters d'acides gras insaturés ou leurs dérivés comprenant au moins une insaturation (amides, esters d'acides gras partiellement hydrogénés, esters d'acides gras polyoxyéthylénés, etc ...), seul(s) ou en mélange avec un ou des hydrocarbures insaturés.

L'homme de métier comprendra que l'invention s'applique également aux composés analogues, c'est-à-dire dont la structure chimique autorise la même fonctionnalité des micro-ondes ou fréquences radio au regard de la polymérisation.

L'invention trouve une application particulièrement intéressante en relation avec le squalène ou spinacène. Il s'agit d'un précurseur du cholestérol que l'on trouve entre autres dans le foie des requins. Il est connu pour ses propriétés très émollientes, antifongiques et anti-bactériennes. Il possède de plus un toucher non gras, ce qui présenterait un réel avantage dans le domaine des produits cosmétiques.

On connaît à son sujet le brevet FR 2 576 303 qui opère par un raffinage de paraffines. On connaît également un procédé de fabrication décrit dans le brevet EP 0 228 980.

On sait également hydrogéner les six double liaisons du squalène pour produire le squalane, utile en cosmétologie. Cette technique est cependant très onéreuse de par sa nature, ce qui est problème pour l'industrie.

Enfin, on sait partir de sous-produits issus du raffinage d'huile d'olive pour obtenir les esters, et distiller les esters pour obtenir le squalène que l'on peut récupérer.

Comme on peut le constater, le squalène et ses dérivés ont été bien étudiés, ce qui est à la mesure de la valeur de ces produits pour l'industrie.

Comme indiqué plus haut, ces produits ont un grand intérêt potentiel en cosmétique. Cependant, si l'on cherche à polymériser le squalène pour obtenir un polymère utilisable en cosmétique, les procédés antérieurs utilisent un chauffage très coûteux.

L'utilisation des micro-ondes ou hautes fréquence, selon l'invention, pour polymériser le squalène, résout les problèmes énoncés plus haut.

On trouvera ci-dessous une description plus détaillée de l'application de l'invention à ces produits.

Le squalène ou spinacène, de formule empirique C₃₀H₅₀, est un polyterpène ayant la formule développée suivante :

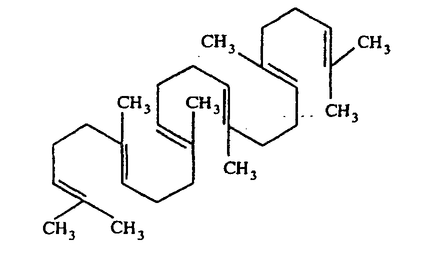

Le sébum humain en comprend plus de 10% d'où son intérêt en dermatologie et en cosmétologie. En effet, le squalène assouplit la peau (caractère émollient) et participe à sa protection (antibactérien, antifongique). C'est un bon véhicule de principes actifs (application en dermatologie). Mais les cosmétologues utilisent plutôt le squalane (squalène hydrogéné) car il est saturé donc plus stable à l'oxydation. Or l'hydrogénation du squalène coûte cher et apporte peu de différenciation par rapport aux hydrocarbures traditionnels tels que les huiles et cires paraffiniques.

De manière avantageuse, et selon un second aspect de l'invention, le demandeur propose de substituer le squalane par du squalène, qui est polymérisé - à l'aide de fréquences micro-ondes ou fréquences radio - seul ou en combinaison avec un ou plusieurs acides gras insaturés ou esters d'acides gras insaturés ou huiles végétales ou animales ou autres hydrocarbures insaturés. Le squalane étant quelques fois remplacé par un polyisobutène (hydrocarbure insaturé) hydrogéné, on peut, sans sortir de la présente invention, remplacer le squalène par un polyisobutène.

Ces huiles et graisses d'origine animale ou végétale, ainsi que leurs dérivés, peuvent subir un traitement préalable visant à les rendre plus réactifs ou au contraire moins réactifs. L'invention concerne aussi bien un réactif isolé qu'un mélange réactionnel comportant deux ou plusieurs composants ou réactifs. Ces mélanges réactionnels peuvent comporter des proportions équivalentes de chaque composant ou certains composants peuvent être majoritaires.

La polymérisation est obtenue par chauffage diélectrique du réactif ou du mélange réactionnel, c'est-à-dire par chauffage sous fréquences micro-ondes ou fréquences radio. La température choisie se situe de préférence entre 200 et 400°C, et mieux encore entre 220 et 350°C.

L'utilisation de fréquences micro-ondes ou fréquences radio permet d'imposer un temps de montée en température (c'est-à-dire temps pour passer de la température ambiante à la température de polymérisation) choisi entre trois et soixante minutes, et mieux encore entre trois et vingt minutes.

La diminution du temps de montée en température permet de mettre rapidement le réactif dans des conditions idéales de polymérisation et ainsi de diminuer le temps total de réaction mais fait appel à une puissance énergétique plus importante sur une courte durée.

Le temps total de réaction dépend du ou des réactifs utilisés et de la viscosité que l'on souhaite obtenir, et se situe de préférence entre quinze minutes et quinze heures, de préférence entre quinze et trois cents soixante minutes et mieux encore entre quinze et cent vingt minutes. Le temps total de réaction pourra être diminué par l'utilisation de température plus élevée. Néanmoins des températures trop.élevées peuvent entraîner la dégradation des produits.

Il faudra donc choisir un couple température de réaction / temps total de réaction qui permette une polymérisation optimale en un temps court mais sans consommation excessive d'énergie ni risque de dégradation du produit. L'homme de métier saura opérer l'optimisation de ces paramètres au moyen d'essais de routine, selon les critères qui viennent d'être indiqués.

La polymérisation peut se faire avec ou sans catalyseur. Les catalyseurs peuvent être homogènes ou hétérogènes. A titre d'exemple, on pourra utiliser comme catalyseur homogène l'anthraquinone, l'anhydride sulfureux, ou les sels solubles de nickel. A titre d'exemple, on peut citer comme catalyseur hétérogène les zeolites ou les résines échangeuses d'ions sous forme acide. On utilisera préférentiellement des catalyseurs particulièrement adaptés aux fréquences radio ou fréquences micro-ondes, tels que les argiles du type montmorillonite ou bentonite, qui ont pour effet d'augmenter l'interaction moléculaire sous chauffage diélectrique.

On vérifiera que l'agitation est suffisante pour assurer une température homogène dans le réacteur.

On peut effectuer la polymérisation sous atmosphère normale ou riche en oxygène (par exemple pour la fabrication d'huiles soufflées) ou, de préférence, en atmosphère inerte (en présence d'azote, d'argon, d'hélium ou autres gaz rares employés seuls ou en mélange). On opérera préférentiellement sous pression réduite en prenant soin de renouveler l'atmosphère.

Dans le cas du squalène, l'invention consiste à réduire le nombre des liaisons non saturées en le polymérisant, seul ou en mélange avec l'un au moins des réactifs cités plus haut, à l'aide du procédé susmentionné ce qui permet d'obtenir un polymère stable à l'oxydation dont la viscosité est liée au degré de polymérisation. On apporte ainsi une seconde fonctionnalité au squalène. Ainsi le polymère obtenu, en plus de son côté émollient, sera un agent de consistance pour les formulations de produits cosmétiques. En outre, le procédé de polymérisation susmentionné coûte moins cher que le procédé d'hydrogénation qui utilise des catalyseurs coûteux.

On peut réaliser les opérations de polymérisation en « batch » (en discontinu) mais on utilisera avantageusement des procédés en continu pour des réactions limitées dans le temps.

Pour arrêter la polymérisation il suffit de baisser la température du mélange réactionnel de manière à se trouver en dessous de la température de réaction. Celle-ci dépend essentiellement du mélange réactionnel. Il est à noter que l'utilisation des micro-ondes ou fréquences radio est à ce point du mode opératoire particulièrement avantageux puisqu'il n'existe pas d'inertie due aux parois du réacteur.

Une série d'étapes supplémentaires permet de raffiner le polymère en fonction des besoins de l'utilisateur final. On peut réduire l'indice d'acide du polymère obtenu, le désodoriser, réduire sa teneur en eau, le décolorer.

Ces étapes de raffinage sont bien connues de l'homme de l'art. On peut en évoquer quelques unes.

La réduction de l'indice d'acide, qui reflète le nombre d'acides carboxyliques libres présents dans le polymère, se fait en rajoutant en excès des agents choisis parmi les alcools, les époxydes, les hydroxydes, les esters glycidiliques, seuls ou en combinaison. On neutralise ainsi l'acidité en synthétisant des esters, des sels,...Pour se faire, il suffit de réduire la température du mélange réactionnel jusqu'à la température de réaction de ces esters, sels...

Il est à noter que l'on gagnera du temps pour cette étape grâce aux fréquences micro-ondes ou fréquences radio car les temps de réaction seront de trois minutes à trois heures en fonction des polymères contre cinq fois plus en moyenne avec des procédés de chauffage classiques.

La désodorisation peut se faire par entraînement à la vapeur. Cette opération s'effectue à des températures comprises entre 50 et 240°C.

Après cette étape, on réduit la teneur en eau soit par des procédés de chauffage traditionnels (chauffage par procédé traditionnel pour atteindre la température d'ébullition de l'eau et distillation sous vide, ou emploi de composés dessicatifs) soit, de manière avantageuse, en utilisant un chauffage diélectrique c'est-à-dire en utilisant des fréquences micro-ondes ou fréquences radio qui font réagir les molécules d'eau et permettent, là encore, un gain de temps. L'homme de l'art saura déterminer la réduction de la teneur en eau appropriée suivant l'application envisagée ; par exemple, une teneur inférieure à 500 ppm est souhaitable pour les lubrifiants.

Dans le cas où la teneur en eau du réactif ou du mélange réactionnel de départ est jugée trop importante, on effectue la réduction de la teneur en eau avant d'effectuer l'étape de polymérisation ; comme décrit ci-dessus, on peut utiliser des méthodes traditionnelles de chauffage ou, avantageusement, un chauffage diélectrique. A titre d'exemple, en procédant ainsi dans le cas où le mélange réactionnel est composé d'esters, on atténuera de manière importante les phénomènes d'hydrolyse responsables d'un indice d'acide important en fin de polymérisation.

La décoloration peut se faire grâce à l'utilisation de l'eau oxygénée ou bien en utilisant des terres décolorantes ou bien encore en passant le polymère obtenu sur des filtres à charbons actifs.

Les polymères obtenus peuvent être utilisés, à titre d'exemples non limitatifs :
- pour la préparation de peintures, colles, adhésifs si l'on choisit des réactifs siccatifs comme l'huiles de lin (fabrication de standolies ou d'huiles soufflées) ou des mélanges de réactifs siccatifs,
- pour la préparation de lubrifiants ou additifs de performance pour lubrifiants si l'on choisit des réactifs moins siccatifs tels que l'huile de tournesol, l'huile de soja ou l'huile de canola,
- pour la préparation de produits cosmétiques si l'on choisit un mélange de réactifs comprenant par exemple de 0 à 100 % en poids de squalène ou de polyisobutène pour 100 à 0 % d'esters d'acides gras ou d'huiles végétales insaturés (tournesol, soja, colza, ricin,...),
- pour la préparation de plastiques, de caoutchoucs,... comme additifs plastifiants.

Les exemples suivants, nullement limitatifs, illustrent l'intérêt et la portée de l'invention. Ils visent à démontrer que l'utilisation des micro-ondes ou fréquences radio permet d'accélérer de manière spectaculaire la vitesse de polymérisation des réactifs. C'est pourquoi, on n'a pas rajouté les étapes de raffinage qui, bien qu'ayant un intérêt, apportent peu à la démonstration.

On a préparé des polymères en utilisant un four micro-onde Synthewave (TM) de la société Prolabo. Cet appareil est muni d'un guide d'onde permettant de focaliser l'énergie micro-onde sur les réactifs. Il restitue une énergie de 300 W pour 600 W de consommation. La longueur d'onde est de 2,45 GHz. On a mis 100 ml des réactifs testés dans un réacteur en quartz de 250 ml. La machine est asservie de manière à ce que la montée en température soit identique à la montée en température observée dans la méthode classique. Cela permet de mettre en évidence que les micro-ondes ont un effet catalytique. Toutefois, dans le cas des micro-ondes, il est possible de réduire le temps de montée en température de jusqu'à 80% par rapport aux méthodes de chauffage traditionnelles.

On prépare la même expérience mais avec un chauffage classique. On a mis 100 ml des réactifs testés dans un réacteur de 250 ml chauffé extérieurement par des résistances.

La vitesse d'agitation est, dans les deux cas, entre 60 et 100 tours/minute (variation avec l'augmentation de viscosité).

| Préparation | | | Chauffage micro-ondes | | | Chauffage classique | | |
|---|---|---|---|---|---|---|---|---|
| Réactifs | T°C | Durée (min) | Aspect | Viscosité (Pa.s) | Indice d'iode (g I2 / 100 g) | Aspect | Viscosité (Pa.s) | Indice d'iode (9 I2 / 100 g) |
| Tournesol | 310 | 120 | Pâteux | 8,9050 | 68 | Liquide | 0,4098 | 97 |
| Tournesol | 290 | 120 | Liquide | 2,0541 | 80 | Liquide | 0,1542 | 100 |
| Tournesol | 270 | 120 | Liquide | 0,2502 | 99 | Liquide | 0,0389 | 120 |
| Tournesol | 310 | 60 | Liquide | 0,5830 | 90 | Liquide | 0,0423 | 115 |
| Colza | 310 | 60 | Liquide | 0,2915 | 94 | Liquide | 0,0356 | 107 |
| Tournesol + 3 g de montmorillonite | 270 | 25 | Liquide | 0,1043 | 106 | Liquide | 0,0321 | 123 |
| 75% Tournesol + 25 % Squalène | 290 | 60 | Liquide | 0,5778 | 102 | Liquide | 0,0414 | 156 |
| 50% Tournesol + 50 % Squalène | 290 | 120 | Liquide | 0,3365 | 160 | Liquide | 0,0261 | 213 |

La température indiquée est une température moyenne après la montée en température. Il est à noter que le gradient de température observé dans le cas du chauffage par fréquences micro-ondes, est inversé par rapport au gradient de température observé dans le cas du chauffage par voie classique. Dans le premier cas, la température aux parois du réacteur est inférieure à celle du milieu du mélange réactionnel. Dans le second cas, c'est le contraire. Il est donc important de prendre une température moyenne.

La viscosité est une viscosité dynamique à 40°C, les résultats sont en Pa.s. On a réalisé ces mesures sur un rhéomètre Carry Med (TM). C'est le résultat qui met en évidence la formation de polymères.

L'indice d'iode permet de mesurer les insaturations qui ont réagi. On a utilisé la norme NF ISO 3961.

Il apparaît que le niveau de température du mélange réactionnel influe réellement sur la viscosité finale du produit. Dans tous les cas, on constate que l'utilisation des fréquences micro-ondes permet de réduire, de manière significative, les temps de réaction.

### Application cosmétique

Nous avons modifié une formule de crème de soin pour les mains en remplaçant tout ou partie des ingrédients suivants par une huile de tournesol polymérisée (HTP) par chauffage diélectrique à 300°C pendant une heure :

| **COMPOSANT** | **FONCTION** | **Formule initiale %** | **Formule modifiée %** |
|---|---|---|---|
| **HTP** | **Substitut** | **0** | **5** |
| Alcool stéarique | Emulsionnant | 5 | 4 |
| Acide stéarique | Emulsionnant | 0,4 | 0,2 |
| Beurre de karité | Emollient/Emulsionnant | 1 | 0 |
| Eau | | 66,6 | 73,8 |
| Glycérine | Hydratant "émulsionnant" | 20 | 10 |
| Autres ingrédients | Additifs divers | 7 | 7 |

Les bénéfices de la formule modifiée sont les suivants :
- elle savonne moins à l'application ;
- elle est plus émolliente (elle assouplit la peau) ;
- elle forme une barrière qui préserve l'hydratation de la peau.

L'huile de tournesol polymérisée est avantageuse pour le formulateur de produits cosmétiques car :
- le pouvoir émollient de la formule est supérieur alors que l'on a augmenté la proportion en eau ;
- l'HTP a un pouvoir viscosant ;
- l'HTP est un coémulsionnant (épaississant).

### Analyse des polymères

Nous avons déterminé par chromatographie liquide haute performance (IUPAC 2.508) le pourcentage de polymères de triglycérides de quatre échantillons d'huile de tournesol polymérisée ayant la même viscosité (460 cSt à 40°C) mais fabriqués à l'aide du chauffage diélectrique (CD) selon l'invention ou à l'aide du chauffage traditionnel (CT).

### POLYMERES DE TRYGLYCERIDES PAR CLHP

| **Réf. Ech**. | **CD/CT** | **% polymères de TG** | **% dimères de TG** | **% de TG** |
|---|---|---|---|---|
| E 106 | CT | 27,5 | 40,9 | 31,6 |
| E 107 | CD | 24,9 | 75,1 | |
| E 162 | CT | 33,7 | 37,9 | 28,4 |
| E 163 | CD | 21,7 | 52,5 | 25,8 |

Les chromatogrammes des échantillons 107 et 163 présentent un épaulement original au niveau du pic de temps de rétention TR = 6,65 min.

La méthode IUPAC 2.508, utilisée pour le dosage des polymères de triglycérides est parfaitement adaptée aux polymères de triglycérides fabriqués à l'aide du chauffage traditionnel mais pas à ceux fabriqués à l'aide du chauffage diélectrique.

Nous mettons ici en évidence la spécificité des polymères obtenus par ce nouveau procédé.

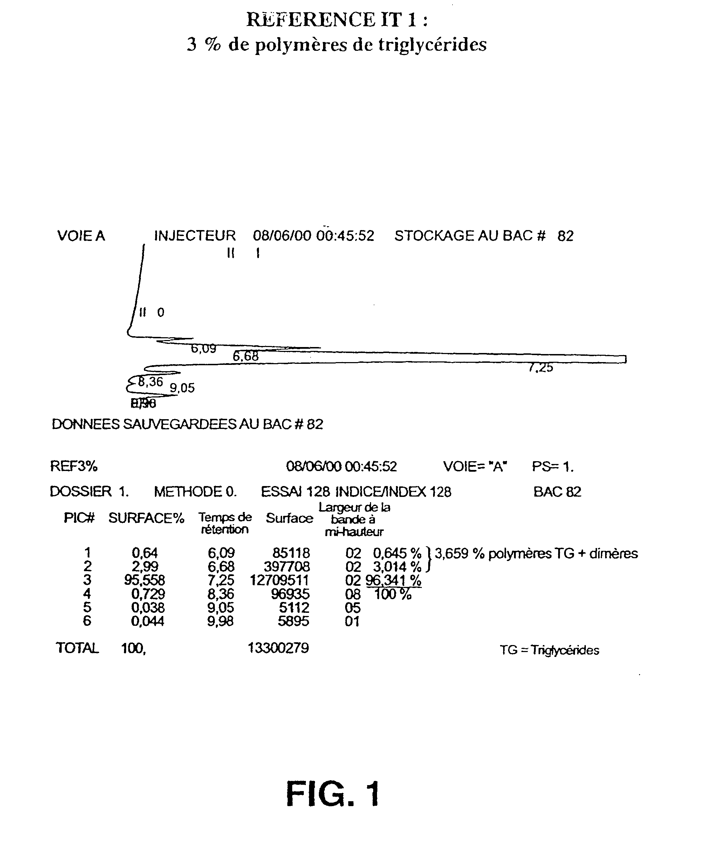

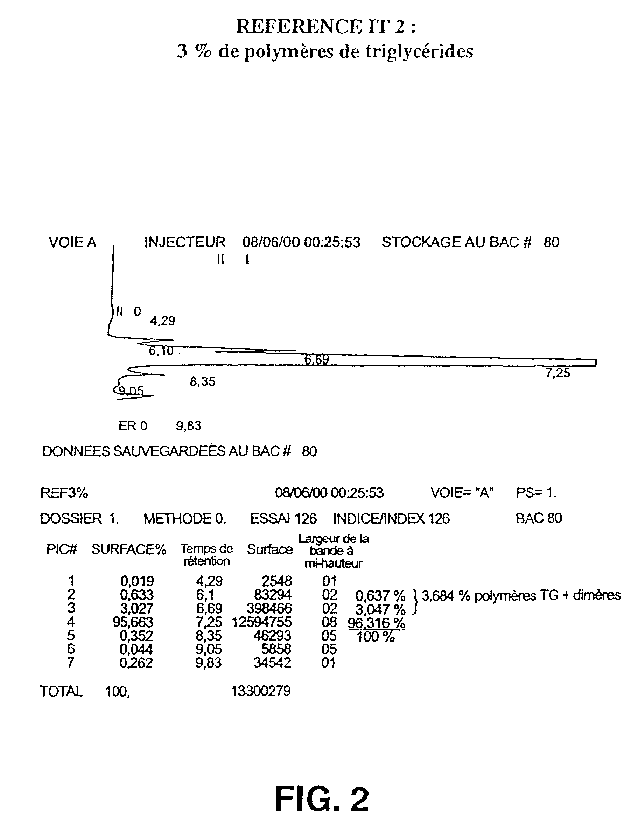

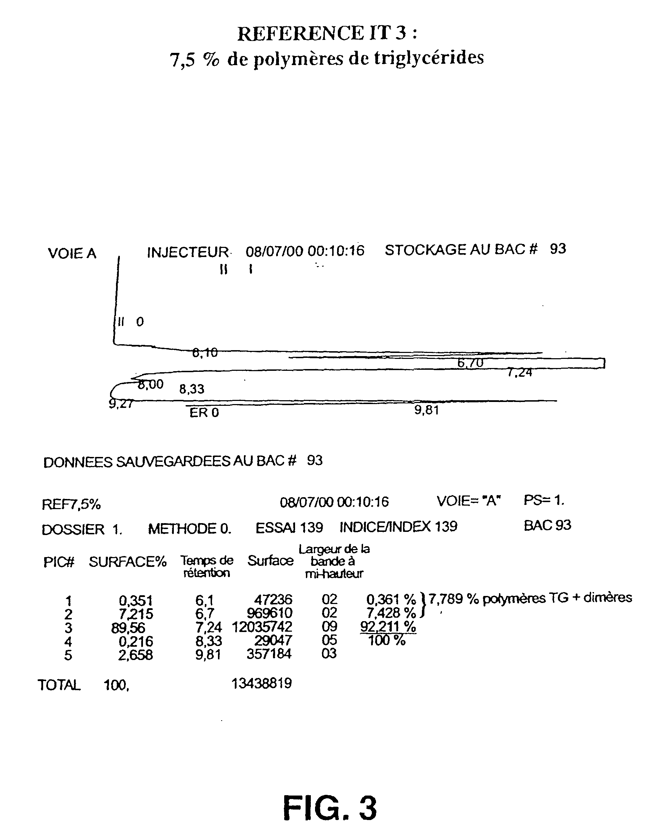

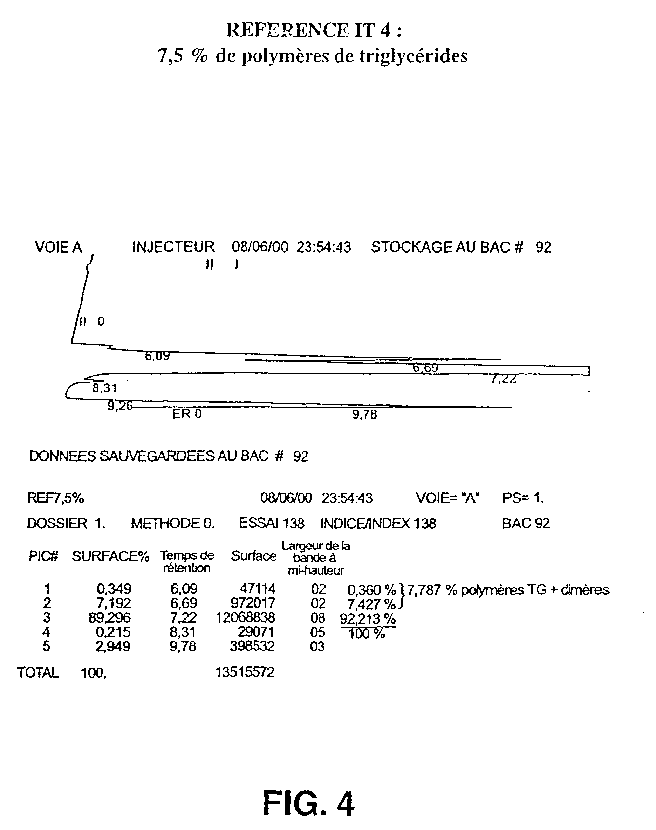

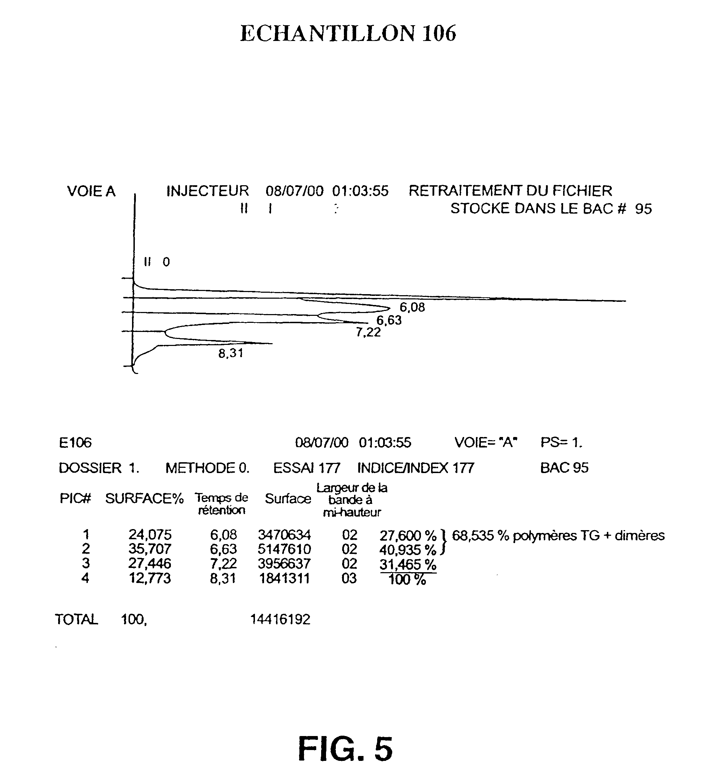

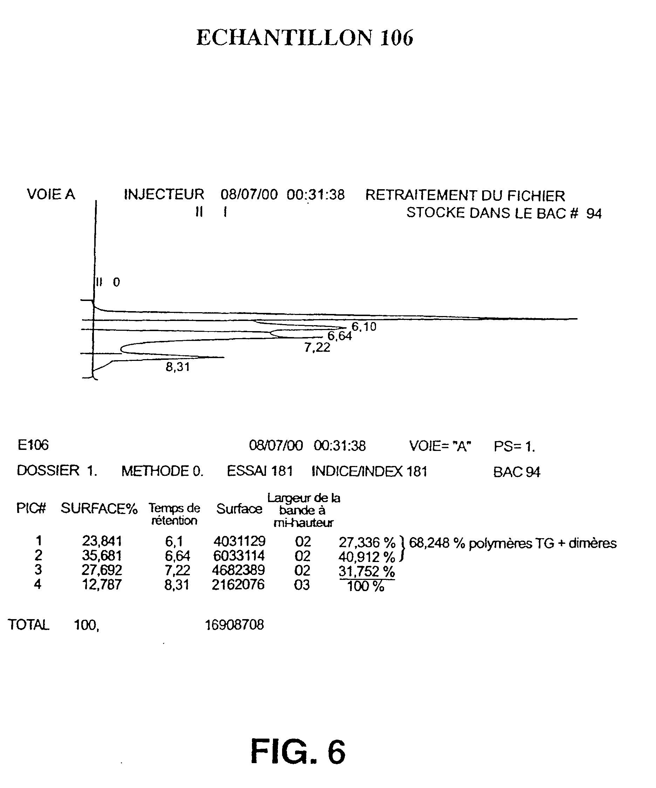

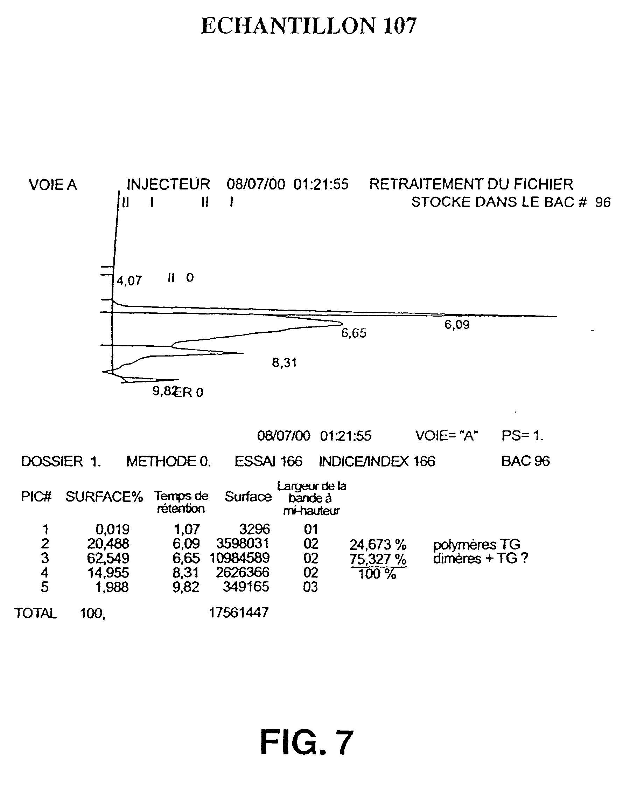

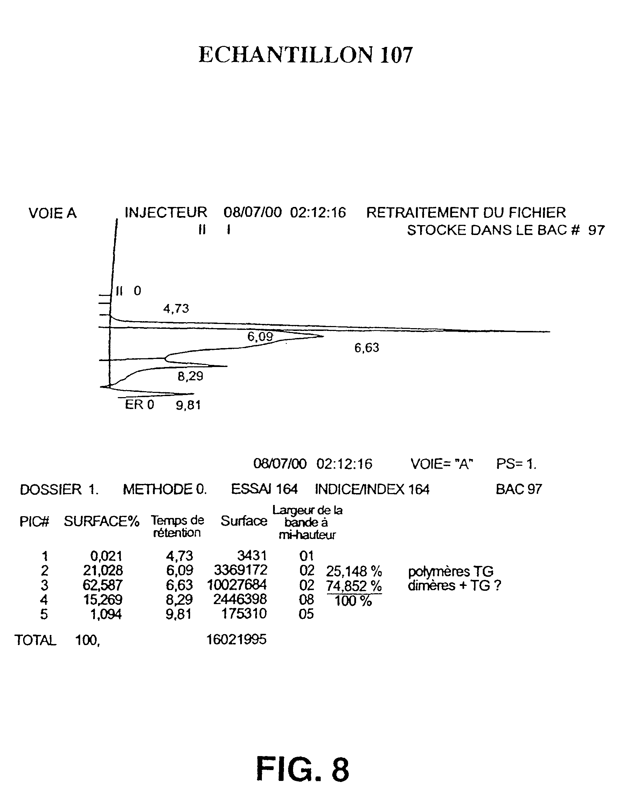

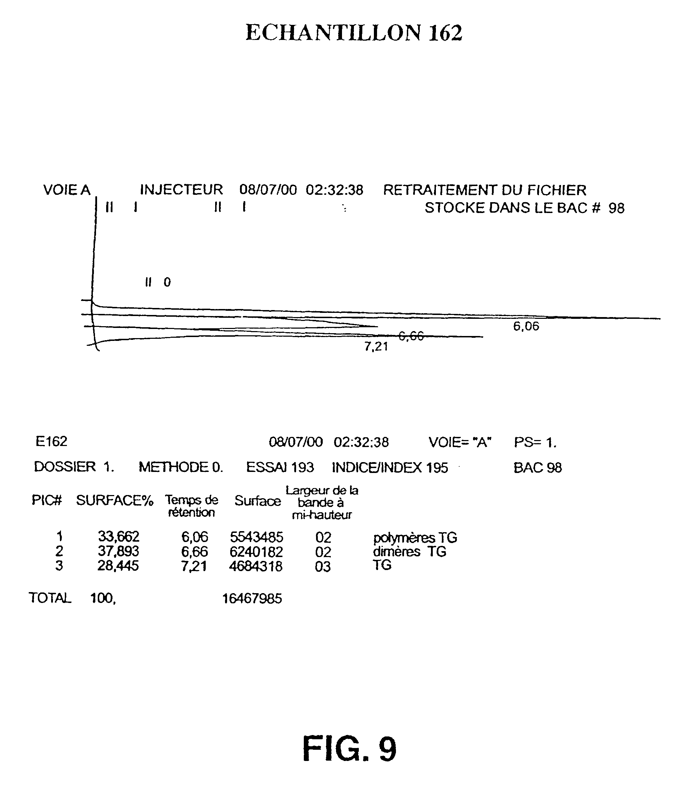

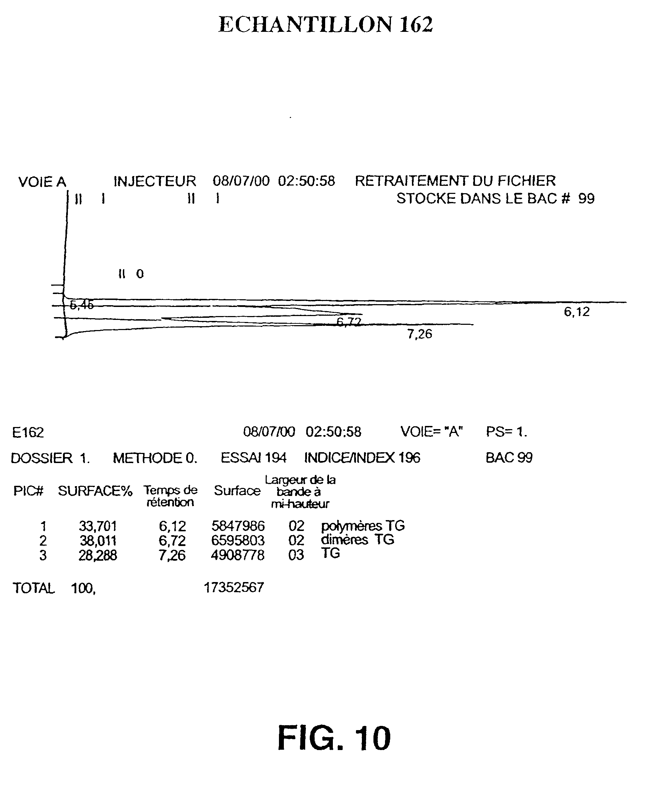

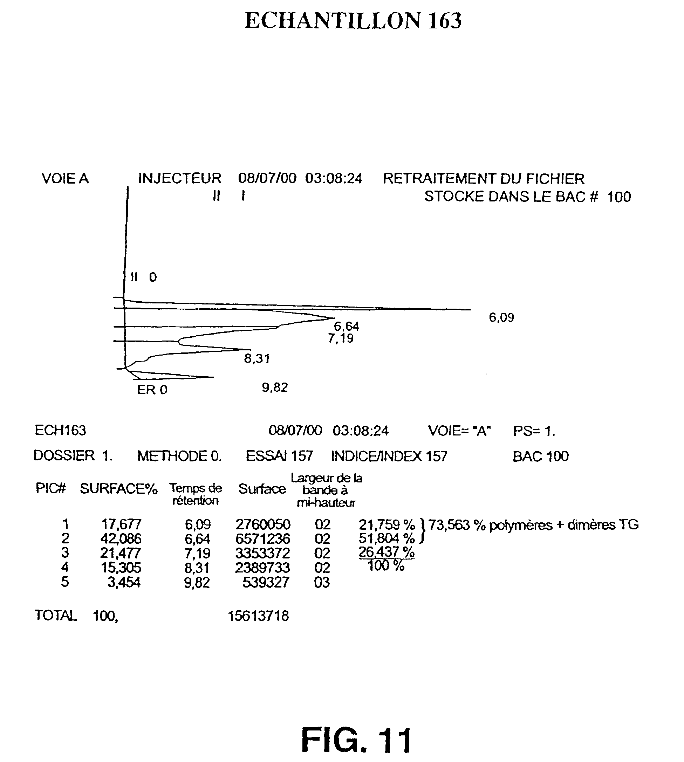

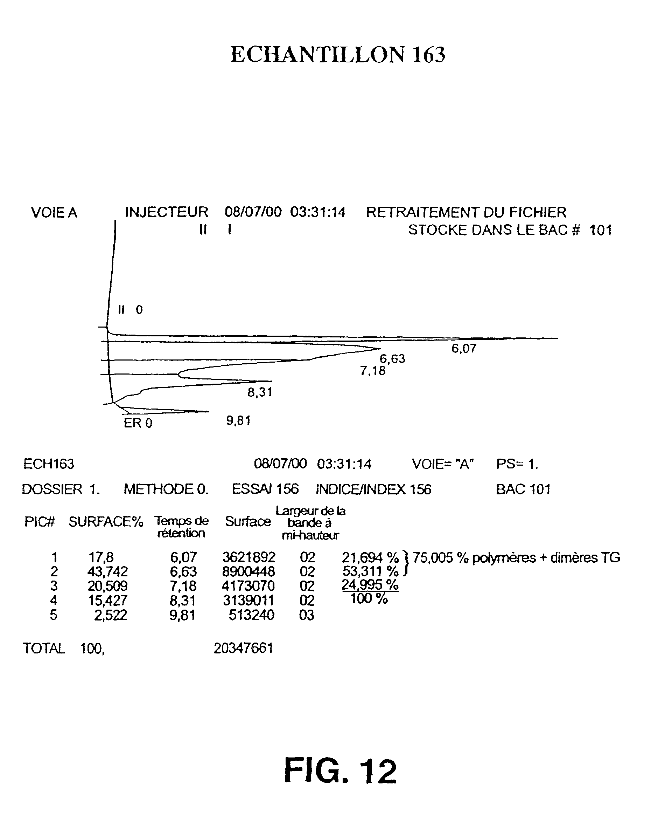

Les figures 1 à 12 annexées représentent les chromatogrammes obtenus dans les conditions indiquées sur chacune des figures, par commodité de lecture.

### Avantage qualitatif du procédé

### Eviter le "burn-up" :

Le chauffage traditionnel, c'est-à-dire par conduction, chauffe une paroi qui elle même chauffe le produit. Les gradients de température sont très importants entre la paroi et le centre ce qui provoque, même sous agitation, des phénomènes de surchauffe des molécules au niveau des parois. Le burn-up (début de carbonisation qui peut se traduire par un vernis dans le cas des corps gras), pour les corps gras apparaît au-dessus du point de fumée qui dépend du type de produit. L'huile de tournesol a un point de fumée de l'ordre de 150°C. On assiste donc, pour la polymérisation des huiles végétales à un encrassement du réacteur qui oblige à des nettoyages importants. Dans le cas de l'utilisation du chauffage diélectrique, on ne voit pas apparaître ce phénomène. Dans le cas du chauffage traditionnel, plus on tente de réduire le temps de montée en température, plus on augmente l'encrassement du réacteur. On n'observe pas ce phénomène avec le chauffage diélectrique.

### Eviter l'inertie :

Tout chauffage traditionnel a une inertie qui vient de la capacité des parois à conserver la chaleur. L'arrêt de l'appareil n'entraîne pas simultanément la baisse de température du réactif. Il existe un temps de latence. Avec le chauffage diélectrique l'arrêt des ondes provoque instantanément la baisse de la température du produit.

### Avantage quantitatif du procédé

Un des grands intérêts de l'utilisation du chauffage diélectrique dans le cadre de la présente invention est de réduire considérablement les temps de montée en température sans observer de phénomènes de burn-up.

On a réalisé l'expérience suivante : on met 33 g d'huile de tournesol sous agitation dans un creuset en quartz de 40 mm de diamètre que l'on positionne dans un guide d'onde. A l'aide d'un générateur micro-ondes de fréquence 2,45 Ghz, on soumet l'échantillon à une puissance de 1 000 W. On utilise un thermomètre fluoroptique (non interférent au champ électromagnétique) mesurant la température à l'aide d'une sonde en fibre optique immergée dans l'huile durant le chauffage micro-ondes. L'huile met 75 s pour passer de 20°C à 320°C.

La deuxième expérience consiste à ne remplacer dans l'expérience que le champ électromagnétique par un flux d'air chaud qui arrive à plus de 400°C (474°C après 3 minutes) au niveau de la paroi du creuset. Non seulement l'huile met 7 minutes 30 pour arriver à 320°C mais on note un encrassement de la paroi du creuset. Cela vient du fait que le gradient de température à l'intérieur du creuset est très important. On réitère l'expérience en ne dépassant pas 377°C. L'huile met cette fois 24 minutes pour atteindre 320°C.

### Tableau récapitulatif :

| **Chauffage** | **Produit** | **Conditions** | **Temps de montée à 300°C** |
|---|---|---|---|
| Micro-ondes | 33 g d'huile de tournesol | 1 000 W | 75 s |
| Air chaud | Idem | 400 à 474°C | 450 s (x 6) |
| Air chaud | Idem | 200 à 377°C | 1 440 s (x 19) |

### Autres matières premières présentant un intérêt

Plus l'huile végétale est polyinsaturée, plus la réaction de polymérisation de l'huile est rapide. De même, il peut être avantageux pour baisser les temps de réaction d'utiliser, en mélange avec des huiles mono ou polyinsaturées, des huiles ayant une forte proportion d'acides gras conjugués (diènes ou triènes conjugués par exemple). Parmi ces huiles, on peut citer l'huile de bois de chine ou Tung oil (comprenant 70 à 80 % d'acide α-eleostéarique), les huiles dont on a isomérisé les acides linoléiques (huile de tournesol isomérisée par catalyse basique par exemple) de manière à obtenir une forte proportion d'acides linoléiques conjugués, les huiles issues de graines de certaines cucurbitacées (environ 20 % d'acide punicique), l'huile d'oiticia (environ 80 % d'acide licanique), l'huile de calendula (contenant plus de 55 % d'acide calendique (8t, 10t, 12c - 18 : 3) ou l'huile de ricin déshydratée.

L'huile de ricin déshydratée présente l'avantage d'être obtenue à partir d'une huile disponible en grande quantité sur le marché (la production mondiale de l'huile de ricin est de plusieurs centaines de milliers de tonnes par an - Source : *Oil World Annual*), de plus son obtention est assez facile comparée à la conjugaison des huiles riches en acide linoléique.

L'huile de ricin déshydratée est obtenue en chauffant l'huile de ricin à des températures de l'ordre de 230-250°C en présence de catalyseurs acides.

Le demandeur a découvert que l'on réduit les temps de réaction pour la déshydratation de l'huile de ricin en utilisant le chauffage diélectrique.

La composition en acide gras de l'huile de ricin est la suivante : (%) :

| | | | | | |
|---|---|---|---|---|---|
| 16:0 | 18:0 | 18;1 | 18:2 | 18:3 | 18:1 (OH) |
| 1 | 1 | 3 | 4 | Trace | 90 |

Elle contient une majorité de C18:1 (OH) ou acide ricinoléique.

Les caractéristiques typiques de l'huile sont :

| | Huile de ricin N°1 |
|---|---|
| Densité | 0,957 - 0,961 |
| Indice de saponification | 179 - 185 |
| Indice d'iode | 82 - 88 |
| Indice d'hydroxyde | 160 - 168 |
| Indice d'acide | 2 - 3 |
| Couleur Gardner | 1 - 2 |
| Viscosité à 25°C (St) | 6,5 - 8,5 |

Pour l'expérience comparative, on a utilisé une huile de ricin dont l'indice d'iode était 85.

On a utilisé le matériel suivant :

| | Chauffage diélectrique | Chauffage traditionnel |
|---|---|---|
| Réacteur | En quartz de 100 ml | En verre de 100 ml |
| Matériel | Synthewave™ 402 de Prolabo | Chauffe ballon à résistance électrique |

On mélange 75 ml d'huile de ricin N°1 avec 4 % en poids de Montmorillonite K10. La vitesse d'agitation est 120 tours/minute. On monte de la température ambiante à 230°C en 20 minutes sous atmosphère d'azote puis on maintient la température à 230°C sous vide pendant 200 minutes pour le chauffage classique et 80 minutes pour le chauffage diélectrique. Les produits obtenus sont filtrés et analysés.

### Résultats comparatifs :

| Mode de chauffage | N2 puis vide | Catalyseur | Température (°C) | Temps (min.) | Viscosité (St à 25°C) | Indice d'iode (gl2/100g) | Indice d'acide (mgKOH/g) |
|---|---|---|---|---|---|---|---|
| Diélectrique | Oui | 4% Montmorillonite K10 | 230 | 80 | 3,4 | 134 | < 12 |
| Tratitionne I | Oui | 4% Montmorillonite K10 | 230 | 200 | 4,7 | 117 | < 9 |

Lorsque l'on déshydrate l'huile de ricin, la viscosité baisse et l'indice d'iode augmente. Cette expérience montre que la déshydratation de l'huile de ricin est plus rapide sous chauffage diélectrique que sous chauffage traditionnel. On a gagné deux heures de temps de réaction pour un résultat supérieur.

Cette huile de ricin déshydratée par chauffage diélectrique peut être ensuite utilisée pour la polymérisation avec une huile végétale mono ou polyinsaturée comme l'huile de colza ou l'huile de tournesol. On obtient ainsi en une heure sous atmosphère inerte des copolymères de très grande viscosité.

L'invention concerne également les polymères ainsi obtenus, et leurs applications en dermatologie et cosmétologie, ou pour la préparation d'additifs, notamment pour lubrifiants, matières plastiques, caoutchouc et analogues.

L'invention concerne également les produits dermatologiques ou cosmétiques ainsi obtenus, ou contenant au moins un tel polymère, ainsi que lesdits additifs, notamment pour lubrifiants, matières plastiques, caoutchouc et analogues.

L'invention concerne enfin les produits industriels contenant au moins un tel additif.

La présente invention a été décrite à titre explicatif et non limitatif. Il pourra, bien entendu, y être apporté toute modification utile sans sortir de son cadre.

## Revendications

1. Procédé de polymérisation d'acides gras insaturés, d'esters d'acides gras insaturés, d'hydrocarbures insaturés, de dérivés insaturé de ces composés, seuls ou en mélange, **caractérisé par le fait que** le réactif ou le mélange réactionnel est soumis à un chauffage diélectrique pour opérer la polymérisation.

2. Procédé selon la revendication 1, **caractérisé en ce** le chauffage est effectué par utilisation de fréquences micro-ondes.

3. Procédé selon la revendication 1, **caractérisé en ce** le chauffage est effectué par utilisation de fréquences radio.

4. Procédé selon l'une quelconque des revendications précédentes, **caractérisé en ce qu'**il est mis en oeuvre avec ou sans catalyseurs.

5. Procédé selon l'une quelconque des revendications précédentes, **caractérisé en ce que** le ou les réactifs sont acides gras, des esters d'acides gras, des huiles végétales ou animales, des hydrocarbures du type polyterpènes ou polyisobutène, ou encore les dérivés de ces produits, comprenant au moins une insaturation, utilisés seuls ou en mélange.

6. Procédé selon l'une quelconque des revendications précédentes, **caractérisé en ce que** le ou les réactifs sont choisis parmi les huiles végétales ou animales insaturées (huile de colza, huile de tournesol, huile de soja, huile de ricin,...), dont les insaturations sont conjuguées ou non.

7. Procédé selon l'une quelconque des revendications précédentes, **caractérisé en ce qu'**on ajoute au réactif ou au mélange réactionnel des catalyseurs hétérogènes ou homogènes.

8. Procédé selon l'une quelconque des revendications précédentes, **caractérisé en ce qu'**on ajoute au réactif ou au mélange réactionnel des catalyseurs répondant aux fréquences radio ou aux fréquences micro-ondes, tel que la montmorillonite.

9. Procédé selon l'une quelconque des revendications précédentes, **caractérisé en ce que** le réactif ou le mélange réactionnel, et éventuellement le(s) catalyseur(s), est placé dans un réacteur de type batch ou discontinu adapté pour recevoir des fréquences micro-ondes ou fréquences radio.

10. Procédé selon l'une quelconque des revendications 1 à 8, **caractérisé en ce que** le réactif ou le mélange réactionnel, et éventuellement le(s) catalyseur(s), est placé dans un réacteur adapté pour faire des réactions en continu.

11. Procédé selon la revendication 2, **caractérisé en ce que** les fréquences sont comprises entre environ 30 GHz et environ 300 MHz.

12. Procédé selon la revendication 11, **caractérisé en ce que** les fréquences sont 2,45 GHz ou 915 MHz.

13. Procédé selon la revendication 3, **caractérisé en ce que** les fréquences sont comprises entre environ 300 MHz et environ 3 MHz.

14. Procédé selon la revendication 13, **caractérisé en ce que** les fréquences sont 13,56 MHz ou 27,12 MHz.

15. Procédé selon l'une quelconque des revendications précédentes, **caractérisé en ce que** la température à laquelle est soumis le réactif ou le mélange réactionnel, et éventuellement le(s) catalyseur(s), est comprise entre 200 et 400°C, préférentiellement entre 220 et 350°C.

16. Procédé selon l'une quelconque des revendications précédentes, **caractérisé en ce que** le temps de montée en température est choisi entre 3 et 60 minutes, de préférence entre 3 et 20 minutes.

17. Procédé selon l'une quelconque des revendications précédentes, **caractérisé en ce que** le temps de réaction est compris entre 15 minutes et 15 heures, de préférence entre 15 minutes et 360 minutes, de préférence encore entre 15 et 120 minutes.

18. Procédé selon l'une quelconque des revendications précédentes, **caractérisé en ce que** l'on effectue la polymérisation sous atmosphère normale ou riche en oxygène ou de préférence inerte ; sous pression réduite, de préférence entre 50 et 10 mm de mercure; en renouvelant régulièrement l'atmosphère.

19. Procédé selon l'une quelconque des revendications précédentes, **caractérisé en ce que** l'on arrête la polymérisation en laissant refroidir ou en refroidissant le réactif ou le mélange réactionnel à une température inférieure à la température de polymérisation et ce suivant la viscosité que l'on souhaite obtenir.

20. Procédé selon l'une quelconque des revendications précédentes, **caractérisé en ce que** l'on procède à la neutralisation de l'acidité en rajoutant un excès d'agents tels que des alcools, des époxydes, des esters glycidiliques, des hydroxydes seuls ou en combinaison.

21. Procédé selon l'une quelconque des revendications précédentes, **caractérisé en ce que** l'on procède à une désodorisation par entraînement à la vapeur.

22. Procédé selon l'une quelconque des revendications précédentes, **caractérisé en ce que** l'on procède à une réduction de la teneur en eau avant ou après la polymérisation.

23. Procédé selon la revendication 22, **caractérisé en ce qu'**on réuit la teneur en eau par chauffage diélectrique à une température comprise entre 100°C et 220°C.

24. Procédé selon l'une quelconque des revendications précédentes, **caractérisé en ce que** l'on procède à une décoloration des produits obtenus.

25. Procédé selon l'une quelconque des revendications précédentes, **caractérisé en ce que** l'on polymérise le squalène.

26. Polymères **caractérisés en ce qu'**ils sont obtenus par le procédé selon l'une quelconque des revendications 1 à 25.

27. Polymères selon la revendication 26, **caractérisés en ce qu'**ils sont obtenus par la polymérisation, suivant le procédé selon l'une quelconque des revendications 1 à 25, de polyterpènes, seuls ou en mélanges avec des acides gras, des esters d'acides gras, des huiles végétales ou animales, comprenant au moins une insaturation.

28. Polymères selon la revendication 26, **caractérisés en ce qu'**ils sont obtenus par la polymérisation, suivant le procédé selon l'une quelconque des revendications 1 à 25, d'au moins un squalène d'origine animale, végétale et synthétique.

29. Polymères selon la revendication 26, **caractérisés en ce qu'**ils sont obtenus par la polymérisation, suivant le procédé selon l'une quelconque des revendications 1 à 25, de polyisobutènes, seuls ou en mélange, avec des acides gras, esters d'acides gras, huiles végétales ou animales, comprenant au moins une insaturation.

30. Polymères selon la revendication 26, **caractérisés en ce qu'**ils sont obtenus par la polymérisation, suivant le procédé selon l'une quelconque des revendications 1 à 25, d'huiles végétales insaturées, comme l'huile de tournesol, l'huile de bois de Chine ou "Tung oil", les huiles dont on a isomérisé les acides linoléiques, les huiles de cucurbitacées, l'huile d'oiticia, l'huile de calendula, et notamment l'huile de ricin déshydratée.

31. Produits dermatologiques ou cosmétiques obtenus avec les, ou contenant au moins un des polymères selon l'une quelconque des revendications 26 à 30.

32. Utilisation des polymères selon les revendications 26 à 30 pour la préparation d'additifs, notamment pour lubrifiants, matières plastiques, caoutchouc.

33. Additifs selon la revendication 32, **caractérisés en ce qu'**ils contiennent au moins un polymère selon la revendication 30.

34. Produits industriels **caractérisés en ce qu'**ils contiennent au moins un additif selon la revendication 33.

## Patentansprüche

1. Verfahren zum Polymerisieren ungesättigter Fettsäuren, ungesättigter Fettsäureester, ungesättigter Kohlenwasserstoffe, ungesättigter Derivate dieser Verbindungen, allein oder in Mischung, **dadurch gekennzeichnet, dass** das Reagens oder das Reaktionsgemisch einer dielektrischen Erwärmung unterzogen wird, um die Polymerisierung durchzuführen.

2. Verfahren nach Anspruch 1, **dadurch gekennzeichnet, dass** die Erwärmung durch Einsatz von Mikrowellenfrequenzen stattfindet.

3. Verfahren nach Anspruch 1, **dadurch gekennzeichnet, dass** die Erwärmung durch Einsatz von Hochfrequenz stattfindet.

4. Verfahren nach einem der vorhergehenden Ansprüche, **dadurch gekennzeichnet, dass** es mit oder ohne Katalysatoren bewerkstelligt wird.

5. Verfahren nach einem der vorhergehenden Ansprüche, **dadurch gekennzeichnet, dass** das Reagens oder die Reagenzien Fettsäuren, Fettsäureester, pflanzliche oder tierische Öle, Kohlenwasserstoffe von der Art von Polyterpenen oder Polyisobuten oder auch Derivate dieser Produkte mit mindestens einer ungesättigten Stelle sind, die allein oder in Mischung verwendet werden.

6. Verfahren nach einem der vorhergehenden Ansprüche, **dadurch gekennzeichnet, dass** das Reagens oder die Reagenzien aus ungesättigten pflanzlichen oder tierischen Ölen ausgewählt sind (Raps-, Sonnenblumen-, Soja-, Rizinusöl, etc.), deren ungesättigten Stellen konjugiert sind oder nicht.

7. Verfahren nach einem der vorhergehenden Ansprüche, **dadurch gekennzeichnet, dass** dem Reagens oder dem Reaktionsgemisch heterogene oder homogene Katalysatoren beigegeben werden.

8. Verfahren nach einem der vorhergehenden Ansprüche, **dadurch gekennzeichnet, dass** dem Reagens oder dem Reaktionsgemisch Katalysatoren wie Montmorillonit beigegeben werden, die auf Hochfrequenz oder auf Mikrowellenfrequenzen ansprechen.

9. Verfahren nach einem der vorhergehenden Ansprüche, **dadurch gekennzeichnet, dass** das Reagens oder das Reaktionsgemisch, und gegebenenfalls der/die Katalysator/en, in einen Batch-Reaktor oder nicht kontinuierlich arbeitenden Reaktor eingebracht wird/werden, der dazu ausgelegt ist, Mikrowellen- oder Hochfrequenz zu empfangen.

10. Verfahren nach einem der Ansprüche 1 bis 8, **dadurch gekennzeichnet, dass** das Reagens oder das Reaktionsgemisch, und gegebenenfalls der/die Katalysator/en, in einen Reaktor eingebracht wird/werden, der dazu ausgelegt ist, kontinuierlich Reaktionen ablaufen zu lassen.

11. Verfahren nach Anspruch 2, **dadurch gekennzeichnet, dass** die Frequenzen ca. 30 GHz bis ca. 300 MHz betragen.

12. Verfahren nach Anspruch 11, **dadurch gekennzeichnet, dass** die Frequenzen 2,45 GHz oder 915 MHz betragen.

13. Verfahren nach Anspruch 3, **dadurch gekennzeichnet, dass** die Frequenzen ca. 300 MHz bis ca. 3 MHz betragen.

14. Verfahren nach Anspruch 13, **dadurch gekennzeichnet, dass** die Frequenzen 13,56 MHz oder 27,12 MHz betragen.

15. Verfahren nach einem der vorhergehenden Ansprüche, **dadurch gekennzeichnet, dass** die Temperatur, der das Reagens oder das Reaktionsgemisch und gegebenenfalls der/die Katalysator/en unterworfen wird/werden, 200 bis 400°C, vorzugsweise 220 bis 350°C beträgt.

16. Verfahren nach einem der vorhergehenden Ansprüche, **dadurch gekennzeichnet, dass** die Temperaturanstiegszeit zwischen 3 und 60 Minuten, vorzugsweise zwischen 3 und 20 Minuten gewählt wird.

17. Verfahren nach einem der vorhergehenden Ansprüche, **dadurch gekennzeichnet, dass** die Reaktionszeit 15 Minuten bis 15 Stunden, vorzugsweise 15 Minuten bis 360 Minuten, und noch bevorzugter 15 bis 120 Minuten beträgt.

18. Verfahren nach einem der vorhergehenden Ansprüche, **dadurch gekennzeichnet, dass** die Polymerisierung unter normaler oder sauerstoffreicher oder vorzugsweise inerter Atmosphäre unter reduziertem Druck, vorzugsweise 50 bis 10 mm Hg stattfindet, indem die Atmosphäre regelmäßig erneuert wird.

19. Verfahren nach einem der vorhergehenden Ansprüche, **dadurch gekennzeichnet, dass** die Polymerisierung angehalten wird, indem man das Reagens oder das Reaktionsgemisch auf eine Temperatur unter der Polymerisierungstemperatur abkühlen lässt oder abkühlt, und zwar je nach der Viskosität, die man erhalten möchte.

20. Verfahren nach einem der vorhergehenden Ansprüche, **dadurch gekennzeichnet, dass** die Neutralisierung des Säuregehalts vorgenommen wird, indem ein Überschuss an Mitteln wie Alkoholen, Epoxiden, Glycidilestern, Hydroxiden, allein oder in Kombination, hinzugefügt wird.

21. Verfahren nach einem der vorhergehenden Ansprüche, **dadurch gekennzeichnet, dass** eine Desodorisierung durch Austreiben mit Wasserdampf vorgenommen wird.

22. Verfahren nach einem der vorhergehenden Ansprüche, **dadurch gekennzeichnet, dass** eine Reduzierung des Wassergehalts vor oder nach der Polymerisierung vorgenommen wird.

23. Verfahren nach Anspruch 22, **dadurch gekennzeichnet, dass** der Wassergehalt durch dielektrische Erwärmung auf eine Temperatur von 100° C bis 220°C reduziert wird.

24. Verfahren nach einem der vorhergehenden Ansprüche, **dadurch gekennzeichnet, dass** eine Entfärbung der erhaltenen Produkte vorgenommen wird.

25. Verfahren nach einem der vorhergehenden Ansprüche, **dadurch gekennzeichnet, dass** Squalen polymerisiert wird.

26. Polymere, die **dadurch gekennzeichnet sind, dass** sie durch das Verfahren nach einem der Ansprüche 1 bis 25 gewonnen werden.

27. Polymere nach Anspruch 26, **dadurch gekennzeichnet, dass** sie durch die Polymerisierung nach dem Verfahren nach einem der Ansprüche 1 bis 25 aus Polyterpenen, alleine oder in Gemischen mit Fettsäuren, Fettsäureestern, pflanzlichen oder tierischen Ölen mit mindesten einer ungesättigten Stelle gewonnen werden.

28. Polymere nach Anspruch 26, **dadurch gekennzeichnet, dass** sie durch die Polymerisierung nach einem der Ansprüche 1 bis 25 mindestens eines Squalens tierischen, pflanzlichen oder synthetischen Ursprungs gewonnen werden.

29. Polymere nach Anspruch 26, **dadurch gekennzeichnet, dass** sie durch die Polymerisierung nach dem Verfahren nach einem der Ansprüche 1 bis 25 aus Polyisobutenen, alleine oder in Gemischen mit Fettsäuren, Fettsäureestern, pflanzlichen oder tierischen Ölen mit mindestens einer ungesättigten Stelle gewonnen werden.

30. Polymere nach Anspruch 26, **dadurch gekennzeichnet, dass** sie durch die Polymerisierung nach einem der Ansprüche 1 bis 25 aus ungesättigten pflanzliche Ölen wie Sonnenblumenöl, Chinaholzöl oder "Tung-Öl", Ölen, deren Linolöle isomerisiert wurden, Kürbisgewächsölen, Oiticika-Öl, Calendulaöl und insbesondere dehydriertem Rizinusöl gewonnen werden.

31. Dermatologische oder kosmetische Produkte, die mit den Polymeren nach einem der Ansprüche 26 bis 30 erhalten werden oder mindestens eines davon enthalten.

32. Verwendung von Polymeren nach den Ansprüchen 26 bis 30 zur Herstellung von Additiven, insbesondere Schmiermitteln, Kunststoffen, Gummi.

33. Additive nach Anspruch 32, **dadurch gekennzeichnet, dass** sie mindestens ein Polymer nach Anspruch 30 enthalten.

34. Industrieprodukte, **dadurch gekennzeichnet, dass** sie mindestens ein Additiv nach Anspruch 33 enthalten.

## Claims

1. Method for polymerizing unsaturated fatty acids, unsaturated fatty acid esters, unsaturated hydrocarbons, and unsaturated derivatives of these compounds, alone or as a mixture, **characterized in that** the reagent or reactive mixture is subjected to dielectric heating in order to perform polymerization.

2. Method according to claim 1, **characterized in that** heating is carried out using microwave frequencies.

3. Method according to claim 1, **characterized in that** heating is carried out using radio frequencies.

4. Method according to any one of the preceding claims, **characterized in that** it is carried out with or without catalysts.

5. Method according to any one of the preceding claims, **characterized in that** the reagent or reagents are fatty acids, fatty acid esters, vegetable or animal oils, hydrocarbons of the polyterpene or polyisobutene type, or alternatively derivatives of these products, having at least one unsaturation, used alone or as a mixture.

6. Method according to any one of the preceding claims, **characterized in that** the reagent or reagents is/are chosen from unsaturated vegetable or animal oils (rapeseed oil, sunflower oil, soya oil, castor oil etc) of which the unsaturations are, or are not, conjugated.

7. Method according to any one of the preceding claims, **characterized in that** heterogeneous or homogeneous catalysts are added to reagent or reactive mixture.

8. Method according to any one of the preceding claims, **characterized in that** catalysts responding to radio or microwave frequencies, such as montmorillonite, are added to the reagent or reactive mixture.

9. Method according to any one of the preceding claims, **characterized in that** the reagent or reactive mixture and optionally the catalyst(s) is/are placed in a reactor of a batch or discontinuous type adapted so as to receive microwave or radio frequencies.

10. Method according to any one of the claims 1 to 8, **characterized in that** the reagent or reactive mixture and optionally the catalyst(s) is/are placed in a reactor adapted to carrying out continuous reactions.

11. Method according to claim 2, **characterized in** the frequencies lie between approximately 30 GHz and approximately 300 MHz.

12. Method according to claim 11, **characterized in** the frequencies are 2.45 GHz or 915 MHz.

13. Method according to claim 3, **characterized in** the frequencies lie between approximately 300 MHz and approximately 3 MHz.

14. Method according to claim 13, **characterized in** the frequencies are 13.56 MHz or 27.12 MHz.

15. Method according to any one of the preceding claims, **characterized in that** the temperature to which the reagent or reactive mixture and optionally the catalyst(s) is/are subjected, lies between 200 and 400°C, preferably between 220 and 350°C.

16. Method according to any one of the preceding claims, **characterized in that** the time taken for the temperature to rise is chosen between 3 and 60 minutes, preferably between 3 and 20 minutes.

17. Method according to any one of the preceding claims, **characterized in that** the reaction time lies between 15 minutes and 15 hours, preferably between 15 minutes and 360 minutes and even more preferably between 15 and 120 minutes.

18. Method according to any one of the preceding claims, **characterized in that** polymerization is carried out under a normal atmosphere or an atmosphere rich in oxygen or preferably an inert atmosphere under a reduced pressure, preferably between 50 and 10 mm of mercury, while regularly renewing the atmosphere.

19. Method according to any one of the preceding claims **characterized that** polymerization is stopped by allowing the reagent or reactive mixture to cool, or by cooling it, to below the polymerization temperature and this according to the viscosity that it is desired to be obtained.

20. Method according to any one of the preceding claims, **characterized in that** the acidity is neutralised by adding an excess of agents such as alcohols, epoxides, glycidyl esters and hydroxides, alone or in combination.

21. Method according to any one of the preceding claims, **characterized in that** deodorization is carried out by steam entrainment.

22. Method according to any one of the preceding claims, **characterized in that** the water content is reduced before or after polymerization.

23. Method according to claim 22, **characterized in that** the water content is reduced by dielectric heating to a temperature of between 100°C and 220°C.

24. Method according to any one of the preceding claims, **characterized in that** the products obtained are decolourised.

25. Method according to any one of the preceding claims, **characterized in that** squalene is polymerized.

26. Polymers **characterized in that** they are obtained by the method according to any one of claims 1 to 25.

27. Polymers according to claim 26, **characterized in that** they are obtained by polymerizing, following the method according to any one of claims 1 to 25, polyterpenes, alone or in mixtures with fatty acids, fatty acid esters and vegetable or animal oils, having at least one unsaturation.

28. Polymers according to claim 26, **characterized in that** they are obtained by polymerizing, following the method according to any one of claims 1 to 25, at least one squalene of animal, vegetable or synthetic origin.

29. Polymers according to claim 26, **characterized in that** they are obtained by polymerizing, following the method according to any one of claims 1 to 25, polyisobutenes, alone or in mixture, with fatty acids, fatty acid esters, vegetable or animal oils having at least one unsaturation.

30. Polymers according to claim 26, **characterized in that** they are obtained by polymerizing, following the method according to any one of claims 1 to 25, unsaturated vegetable oils, such as sunflower oil, Chinawood oil or "Tung oil", oils of which the linoleic acids have been isomerized, cucurbitaceous oils, oiticica oil, calendula oil, and in particular dehydrated castor oil.

31. Dermatological or cosmetic products obtained with the polymers according to any one of claims 26 to 30 or containing at least one of these polymers.

32. Use of the polymers according to claims 26 to 30 for preparing additives, in particular for lubricants, plastic materials and rubber.

33. Additives according to claim 32, **characterized in that** they contain at least one polymer according to claim 30.

34. Industrial products **characterized in that** they contain at least one additive according to claim 33.
